# EUROPEAN PATENT SPECIFICATION

(11) **EP 2 360 083 B1**
(45) Date of publication and mention of the grant of the patent: **05.09.2012**
(21) Application number: 10154499.7
(22) Date of filing: 24.02.2010
(51) Int. Cl.: B62D 51/02, B62D 51/04

(54) **Industrial truck with motorized pivotal platform**
Flurförderfahrzeug mit motorbetriebener Schwenkplattform
Camion industriel doté d'une plateforme pivotante motorisée

(43) Date of publication of application: 24.08.2011
(73) Proprietor: BT Products AB, 595 81 Mjölby (SE)
(72) Inventor: Andersson, Lars-Gunnar, 58231, Linköping (SE)
(74) Representative: Börlin, Maria

(56) References cited:
- EP-A1- 0 449 029
- EP-A1- 0 466 065
- EP-A1- 2 014 605

## Description

### TECHNICAL FIELD

The present invention relates to an industrial truck comprising a pivotal driver's platform that is pivotal from an upright position to a lowered position and further is resiliently suspended in the lowered position.

Document EP 0 466 065 A discloses an industrial truck according to the preamble of claim 1.

### BACKGROUND ART

Industrial trucks, for example tiller arm trucks may be provided with a driver's platform that is pivotal from an upright position to a lowered position so that the driver can ride on the truck while standing on the platform. The platform is also generally provided with suspension in order to absorb shocks that are generated when the truck is driven over bumps or on uneven ground.

JP2002145128 shows a tiller arm truck with a pivotal platform which can be pivoted downwards until a forward part of the platform presses against a spring biased plate. When a driver is standing on the platform the spring counteracts the weight of a driver so that the platform is held in an essential level position. When the truck encounters a bump, the spring allows the platform to swing a few degrees around its pivotal axis whereby suspension is provided for the platform. A similar pivotal platform is also showed in JP 2002128485.

One problem with these known trucks is that the driver manually must lower the pivotal platform from the upright position to the lowered position. The driver thereby typically uses his foot to swing the platform downwards and upwards. However, some drivers may also lower and raise the platform by hand. Manual operation of the platform is cumbersome for the driver and could lead to injuries over time.

Thus, it is an object of the present invention to provide an improved industrial truck with a pivotal platform which can be raised or lowered with a minimum of manual labour.

### SUMMARY OF THE INVENTION

This object is achieved by an industrial truck comprising a driver's platform and at least one shaft for pivotally attaching the platform to the truck, whereby the platform is pivotal from an upright position to a lowered position and further is resiliently suspended in the lowered position whereby the platform is fixed to a portion of said at least one shaft;
and whereby at least one motor is provided and arranged to turn the at least one shaft so that the platform is pivoted between the upright and the lowered positions;
characterised in that the shaft for pivotally attaching the platform to the truck coincides with the output shaft of the motor;
wherein the shaft is freely rotatable when the platform is in the lowered position.

By the motorized pivoting of the platform, cumbersome labour for the driver is minimized. Resilient suspension of the platform in the lowered position is further ensured by the free rotating of the shaft in this position. Overall, the platform provides an ergonomically suitable working platform for the driver and minimizes the risk for injuries.

Preferably, the platform is fixed to said at least one shaft in a rotationally fixed manner.

Preferably, the shaft is freely rotatable when the platform is in a predetermined lowered position.

Preferably, the predetermined position is the horizontal position of the platform.

According to a preferred embodiment, the shaft for pivotally attaching the platform to the truck is the output shaft of the at least one motor.

The motorized platform according to this embodiment is reliable and cost effective since it comprises few components and is easy to assemble. A further advantage is that the direct connection between the drive shaft of the motor and the platform, without intermediate components, provides for a compact, space saving construction. An additional advantage is that torque from the motor is used in the most efficient manner, since no force is lost to intermediate components.

Preferably, the at least one motor is a DC-electrical motor arranged such that the output shaft of the motor is freely rotatable when the motor is currentless.

A simple and effective way of providing free rotation of the shaft in the lowered position is thereby provided. Furthermore is the need for complicated gear arrangements avoided.

The at least one motor may be firmly fixed to a frame of the truck, wherein the platform comprises at least one attachment element having at least one opening, wherein the shaft of the at least one motor extends through the at least one opening.

The drive shaft of the at least one motor may comprises a protuberance and the at least one opening in the platform comprises an indention for receiving the protuberance, so that the shaft of the motor is prevented from rotation in the opening in the platform.

The frame may comprises two openings; the platform may comprise a first and a second attachment element which protrudes from a forward portion of the platform, wherein each attachment element comprises an opening, wherein a first motor is arranged such that the shaft of said first motor extends through the first opening of the frame and the opening of the first attachment element of the platform and a second motor is arranged such that the shaft of said second motor extends through the second opening of the frame and the opening of the second attachment element of the platform.

The truck may comprise a flat element which is resiliently suspended in the frame, wherein a forward portion of the platform abuts against the flat element when the platform is in the lowered position.

### BRIEF DESCRIPTION OF THE DRAWINGS

Figure 1 shows schematically a side view of an industrial truck comprising a pivotal driver's platform according to the invention.
Figure 2 shows the assembled platform according to the first embodiment of the invention in a lowered, horizontal position.
Figures 3a - 3c are side views of the platform according to the first embodiment of the invention during pivoting of the platform from an upright to a lowered horizontal position.
Figure 4 is an exploded view showing the parts of the platform according to the first embodiment of the invention.

### DETAILED DESCRIPTION

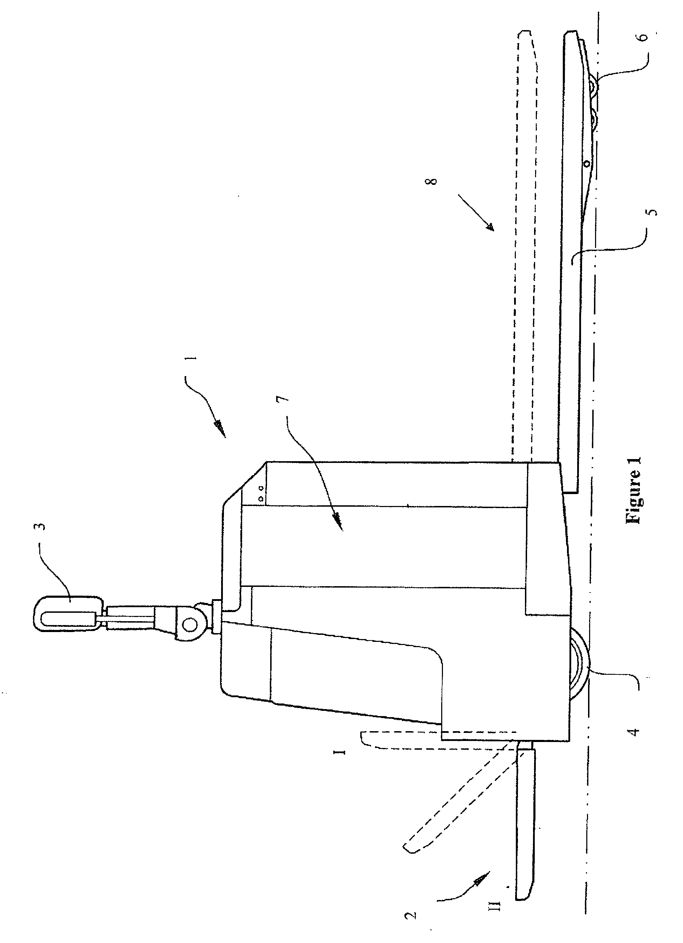

Figure 1 illustrates schematically an industrial truck 1 according to the invention. The truck illustrated in figure 1 is a so called tiller arm truck. This truck type, also known as stacker or order pick truck, is generally known in the art and its features will therefore only be briefly described. The truck comprises a housing 7 in which the motor, the hydraulics and the control system of the truck are located (these parts are not shown in figure 1). The truck comprises a drive wheel 4 which is propelled by the motor, forward support wheels 6 that are arranged on support arms 5 and a load engaging means 8 that can be raised and lowered. The truck 1 further comprises a platform 2 which is pivotal between an upright position I and a lowered, horizontal position II. A steering means 3 e.g. a tiller arm is arranged such that the driver can steer the truck while walking behind the truck or while standing on the platform when the platform is pivoted into a lowered position. Although a tiller arm truck is described in figure 1, it is obvious that the invention also is applicable to other truck types with driver's platforms that are pivotal between an upright position and a lowered position.

Above and in the following is by "horizontal position" meant that the platform is parallel to the ground, when the truck is positioned on even ground. By upright position" is meant that the platform is essential parallel to the motor housing of the truck.

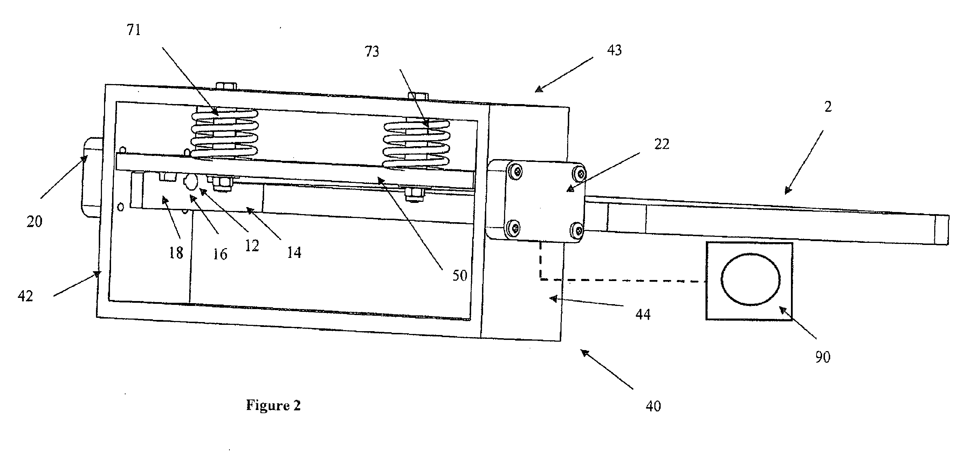

Figure 2 shows in detail the platform of the truck according to the invention. In figure 2, a driver's platform 2 is pivotally arranged in a frame 40 that is firmly affixed to the truck. The platform comprises two attachment elements 14, 15 (only attachment element 14 is shown in figure 2). The attachment elements 14, 15 are pivotally attached to the frame 40 by the output shafts of two motors 20, 22 that are fixed on the vertical beams 42, 44 of the frame 40.

In this embodiment the motors are direct current (DC) electrical motors. The DC motors are arranged such that the output shaft of each motor rotates in different directions (clockwise/anticlockwise) depending on the direction of the electric current that is flowing through the motor. The DC motors are further arranged such that the motor output shaft can rotate freely in the motor when no current is running through the motor.

The output shafts of the motors extend through openings in the vertical beams of the frame and into openings through the attachment elements 14, 15 of the platform 2. In figure 2, opening 12 in attachment element 14 is visible. The openings in the beams are covered by the motors 20, 22 and are therefore not visible in figure 2. The output shafts are fixed, i.e. locked in the openings in the attachment elements. This is achieved in that each shaft comprises a protuberance (not shown in figure 2) and each opening in the attachment elements comprise an indention 16 in which the protuberance of the shaft is received. When the protuberance is received in the corresponding indentation, the shaft cannot rotate in the opening in the attachment element. The output shafts are thereby locked against rotation in the openings of the attachment elements.

A flat element 50 is suspended from the upper beam 43 of the frame 40 in two rods 61, 62. Between the flat element 50 and the beam 43 are two helical springs 71, 72 arranged. When the platform is in the lowered position, a forward portion 18, 19 of the attachment elements 14, 15 of the platform abuts the underside of the flat element 50. If the platform is pressed downwards, e.g. due to the weight of the driver when the truck runs over a bump, the springs 71, 73 dampen the upwards directed movement of forward portion 18 and 19. Resilient suspension is thereby provided for the platform.

In figure 2 the motors 20, 22 are connected to a control 90 on the truck, e.g. an electrical switch comprising a knob or button. The control enables the driver of the truck to manually turn the motors 20, 22 on or off and to control the direction of rotation of the motors.

The truck may further comprise a position sensor (not shown) that detects the position of the platform. For example, the sensor may be an inductive sensor, a mechanical sensor or a magnetic sensor.

The motors 20, 22 and the sensor may be connected to the control system of the truck so that starting and stopping of the motors as well as the direction of turning of the motors can be automatically controlled. For example, the platform may be automatically lowered when the truck is started.

The platform may comprise means to secure the platform in upright position, so that the platform do not fall down during driving of the truck. For example, the platform may be arranged such that it in upright position leans inwards, towards the rear housing of the truck. The platform and the truck could also comprise a mechanical attachment arrangement (not shown) that secures the platform in upright position. It is also possible to arrange a gas spring (not shown) between the platform and the motor housing of the truck. The gas spring and the motors are preferably configured such that the gas spring is strong enough to hold the platform in upright position and that the motors are strong enough to lower the platform against the force of the gas spring. In this arrangement, the platform may be lowered by the motors and raised by the gas spring.

The platform may also be provided with means (not shown) that detects if a driver is present on the platform. The sensor may for example be a load sensor that is connected to the control system of the truck. The control system is configured such that if the sensor detects that a driver is present on the platform the motors are prevented from starting.

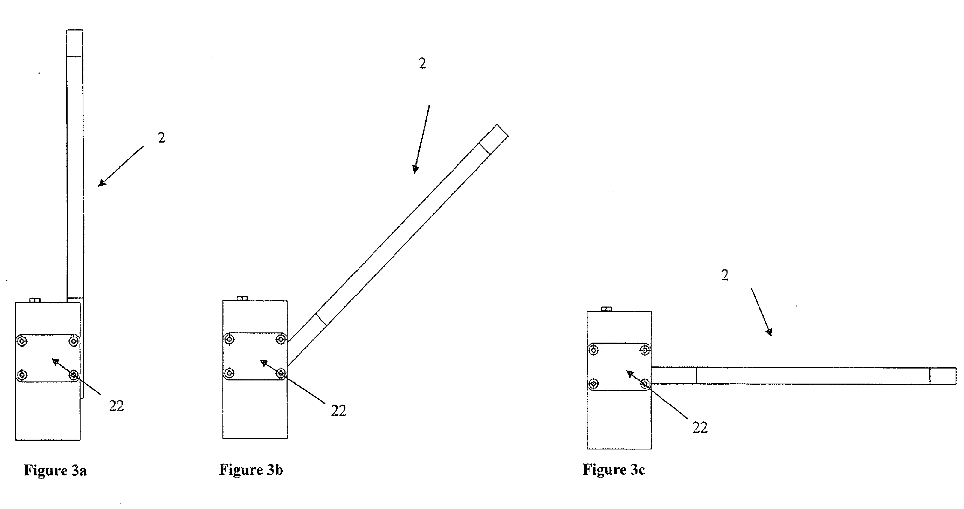

In the following will the operation of the platform be described with reference to figures 3a-3c.

Figure 3a shows a side view of the platform in an upright position. To lower the platform, the driver of the truck moves control 90 into lowering mode. The output shafts of the motors 20, 22 thereby start to turn. With reference to figure 2, and seen in a direction from each motor 20, 22 towards the output shaft of respective motor, the shaft of motor 22 turns clockwise and the shaft of motor 20 turns anti-clockwise. Since a portion of the motor shafts extend into the openings 12, 13 of the attachment elements of the platform and are fixed in the openings 12, 13, the turning of the motor shaft causes the platform to pivot downwards, see figure 3b. When the platform is pivoted to the horizontal position, see figure 3c, the motors are stopped. The horizontal position of the platform may for example be determined by the position sensor or by the time or distance that the motors have rotated. In this position the current to the motors 20, 22 is turned off. This can be achieved manually or by the control system of the truck. When no current is running through the motors the output shafts of respective motor can rotate freely in the motor. Thereby is achieved that the platform freely can pivot upwards and downwards against the resilient element 50.

To raise the platform, the driver moves the control (90) in raising mode whereby the shafts of each motor start to turn in the opposite direction, i.e. the shaft of motor 22 turns anti-clockwise and the shaft of motor 20 turns clockwise.

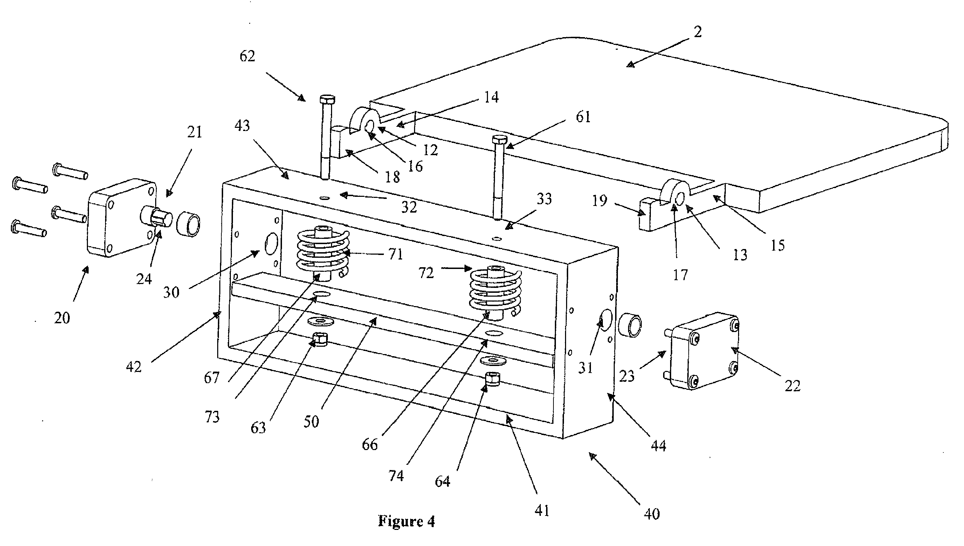

Figure 4 shows an exploded view of the pivotal platform of the industrial truck shown in figure 2.

### The platform

The platform 2 has a generally flat surface onto which a driver may stand while driving the truck. The platform is manufactured from a suitable construction material e.g. steel or fibre reinforced plastics and is dimensioned to withstand the weight of a driver.

The platform 2 comprises two attachment elements 14 and 15 which each protrude from the front edge of the platform. Each attachment element 14 and 15 comprises a ring-shaped opening 12, 13 for receiving a motor ouput shaft 21, 23 by which the platform is pivotally attached to the frame 40 of the truck. In figure 2 is only the motor output shaft 21 of motor 20 visible, however an identical motor output shaft 23 is comprised in motor 22. Half of the ring-shaped opening is located in the attachment element and the other half of the ring-shaped opening is delimited by a protruding, semicircle-shaped portion of the attachment element. Each ring-shaped opening 12, 13 comprises a small indentation 16, 17 for locking the motor shafts, which have corresponding protuberances 24, 25. In figure 4 is protuberance 24 of output shaft 21 visible, however output shaft 23 of the other motor 22 also comprise a protuberance 25. Each attachment element 14, 15 further comprises a protruding portion 18 and 19 for interacting with the flat element 50 in order to resiliently rest the platform in the lowered position. The protruding portions 18, 19 extend from the ring-shaped opening in a direction away from the platform 2.

The length of the attachment elements 14, 15 and the protruding portion 18, 19 as well as the position of the ring-shaped opening 12, 13 on the attachment element depend on the construction of the truck and the design of the supporting element. For example, the openings 12 and 13 may also be holes through the centre of the attachment elements 14 and 15.

### The frame

The frame 40 has a generally rectangular shape and consists of two flat horizontal beams 41, 43 and two flat vertical beams 42 and 44 that are welded or riveted together. The frame may also be cast in one piece. The frame 40 comprises fastening means, e.g. openings by which the frame can be firmly attached to the motor housing of the truck, e.g. by bolts. The fastening means are not shown in figure 2.

The vertical beams 42 and 44 of the frame each comprise an opening 30, 31 through which the output shaft of each motor 20, 22 can be inserted. The upper, horizontal beam 43 of the frame comprises holes 32, 33 for receiving rods 61, 62 from which the flat element 50 is suspended.

The flat element 50 has the form of a flat rectangular plate and extends between the vertical beams 42 and 44. The flat element 50 hangs from the upper horizontal beam 43 in the rods 61 and 62. The upper ends of the rods are firmly attached to beam 43, e.g. by screws. The other end of each rod extends through a hole 73, 74 in the flat element and on the end of each rod is a nut 63, 64 firmly attached. When no force is acting on the flat element 50, the flat element rests on the nuts. If an upwards directed force is applied on the underside of the supporting element it slides on rods 61 and 62 in a direction towards the beam 43.

### Spring means

Spring means 71, 72 are arranged between the flat member 50 and the upper horizontal beam 43. The spring means 71, 72 may for example be one or more helical springs as shown in figure 2. The spring means could also be one or more cup springs, wave springs or another type of pressure spring. The spring means are dimensioned, e.g. the length and the force of the spring means, such that adequate suspension is provided when a driver is standing on the platform.

According to one alternative, the spring means are progressive. In a progressive spring, the stiffness of the spring varies with the load that is applied to the spring. Thus, the spring has a low stiffness when a small load is applied to the spring and a high stiffness when a large load is applied to the spring.

The progressive spring means is preferably helical and may be of various configurations. According to one alternative, the distance between the coils of the spring varies. According to another alternative, the dimension of the spring wire varies throughout the length of the spring. According to a further alternative, the diameter of the spring coils varies so that the spring obtains a conical shape.

Preferably, the distance between the coils in both ends of the spring is narrower than the distance between the coils in the centre of the spring.

As can be seen in figure 4, the springs are slid over tubular elements 66, 67. The purpose of these elements is to fix the rods 61 and 62 and ensure that the correct pretension is applied to the springs 71, 73.

### The motors

On each side of the frame 40 is a motor 20, 22 arranged. The motors are firmly affixed to the vertical beams 42, 44 of the frame 40, e.g by bolts. Each motor comprises an output shaft 21, 23. One portion of the shaft is rotatable driven by the motor and the other portion of the shaft extends outside the motor. The output shafts 21, 23 of each motor extend through the openings 30, 31 in the frame 40 and into the openings 12, 13 of the attachment means 14, 15 of the platform 2.

Although particular embodiments have been disclosed this has been done for purpose of illustration only, and is not intended to be limiting. Features of the enclosed embodiments may be combined. In particular it is contemplated by the inventor that various substitutions, alterations and modifications may be made within the scope of the appended claims.

For instance, the platform could be pivotally attached to the truck by a separate shaft and the output shaft of the motor could be connected to the shaft of the platform. In order to increase or reduce the output torque from the motor it is possible to arrange a gear arrangement between the output shafts of the motor and the platform. It is also possible to use other motors that DC-motors. For example could a hydraulic motor be arranged to turn the shaft of the platform. In this case a clutch arrangement is arranged between the shaft of the platform and the output shaft of the motor in order to provide free rotation of the shaft of the platform in the lowered position.

## Claims

1. An industrial truck (1) comprising a driver's platform (2) and at least one shaft (21, 23) for pivotally attaching the platform (2) to the truck (1), whereby the platform (2) is pivotal from an upright position to a lowered position and further is resiliently suspended in the lowered position whereby
the platform (2) is fixed to a portion of said at least one shaft (21, 23);
and whereby at leat least one motor (20, 22) is provided and, arranged to turn the at least one shaft (21, 23) so that the platform (2) is pivoted between the upright and the lowered positions; **characterized in**
**that** the shaft (21, 23) for pivotally attaching the platform (2) to the truck (1) coincides with the output shaft (21, 23) of the motor (20, 22);
wherein the shaft (21, 23) is freely rotatable when the platform is in the lowered position.

2. Industrial truck according to claim 1, wherein the platform (2) is fixed to said at least one shaft (21, 23) in a rotationally fixed manner.

3. Industrial truck according to any of the preceding claims, **wherein** the shaft (21, 23) is freely rotatable when the platform (2) is in a predetermined lowered position.

4. Industrial truck according to claim 3, wherein the predetermined position is the horizontal position of the platform.

5. The industrial truck according to any of the preceding claims, **wherein** the shaft (21, 23) for pivotally attaching the platform (2) to the truck is the output shaft (21, 23) of the at least one motor (20, 22).

6. The industrial truck according to any of the preceding claims, **wherein** the at least one motor (20, 22) is a DC-electrical motor arranged such that the output shaft (21, 23) of the motor is freely rotatable when the motor is currentless.

7. The industrial truck (1) according to any of claims 5 or 6, **wherein** the at least one motor (20, 22) is firmly fixed to a frame (40) of the truck (1), wherein the platform (2) comprises at least one attachment element (14, 15) having at least one opening (12, 13), wherein the output shaft (21, 23) of the at least one motor (20, 22) extends through the at least one opening (12, 13).

8. The industrial truck according to any of claims 5 - 7, **wherein** the output shaft (21, 23) of the at least one motor (20, 22) comprises a protuberance (24, 25) and the at least one opening (12, 13) in the platform (2) comprises an indention (16, 17) for receiving the protuberance (24, 25), so that the output shaft (21) of the motor is prevented from rotation in the opening (12, 13) in the platform (2).

9. The industrial truck according to claims 7 or 8, **wherein** the frame (40) comprises two openings (31), (30); the platform (2) comprises a first and a second attachment element (14, 15) which protrudes from a forward portion of the platform (2), wherein each attachment element comprises an opening (12, 13), wherein a first motor (20) is arranged such that the shaft (21) of said first motor (20) extends through the first opening (30) of the frame (40) and the opening (12) of the first attachment element (14) of the platform and a second motor (22) is arranged such that the shaft (23) of said second motor extends through the second opening (31) of the frame (40) and the opening (13) of the second attachment element (15) of the platform (2).

10. The industrial truck according to any of claims 7 -9, **wherein** the truck (1) comprises a flat element (50) which is resiliently suspended in the frame (40), wherein the at least one attachment element (14, 15) of the platform (2) abuts against the flat element (50) when the platform (2) is in the lowered position.

## Patentansprüche

1. Flurförderfahrzeug (1), umfassend eine Fahrerplattform (2) und zumindest eine Welle (21, 23) zum schwenkbaren Befestigen der Plattform (2) an dem Fahrzeug (1), wodurch die Plattform (2) von einer aufrechten Position in Richtung einer abgesenkten Position schwenkbar ist und ferner elastisch in der abgesenkten Position abgestützt wird,
wodurch die Plattform (2) an einem Abschnitt von der zumindest einen Welle (21, 23) befestigt wird; und
wodurch zumindest ein Motor vorgesehen ist und angeordnet ist, um die zumindest eine Welle (21, 23) zu drehen, so dass die Plattform (2) zwischen der aufrechten und der abgesenkten Position geschwenkt wird,
**dadurch gekennzeichnet, dass**
die Welle (21, 23) zum schwenkbaren Befestigen der Plattform (2) an dem Fahrzeug (1) sich mit der Ausgangswelle (21, 23) des Motors (20, 22) deckt;
wobei die Welle (21, 23) frei rotierbar ist, wenn die Plattform sich in der abgesenkten Position befindet.

2. Flurförderfahrzeug nach Anspruch 1, bei dem die Plattform (2) an der zumindest einen Welle (21, 23) auf eine rotationsfeste Weise befestigt ist.

3. Flurförderfahrzeug nach einem der vorhergehenden Ansprüche, bei dem die Welle (21, 23) frei rotierbar ist, wenn die Plattform (2) sich in einer vorgegebenen abgesenkten Position befindet.

4. Flurförderfahrzeug nach Anspruch 3, bei dem die vorgegebene Position die horizontale Position der Plattform ist.

5. Flurförderfahrzeug nach einem der vorhergehenden Ansprüche, bei dem die Welle (21, 23) zum schwenkbaren Befestigen der Plattform (2) an dem Fahrzeug die Ausgangswelle (21, 23) des zumindest einen Motors (20, 22) ist.

6. Flurförderfahrzeug nach einem der vorhergehenden Ansprüche, bei dem der zumindest eine Motor (20, 22) ein elektrischer DC-Motor ist, der angeordnet ist, so dass die Ausgangswelle (21, 23) des Motors frei rotierbar ist, wenn der Motor stromlos ist.

7. Flurförderfahrzeug nach einem der Ansprüche 5 oder 6, bei dem der zumindest eine Motor (20, 22) fest an einem Rahmen (40) des Fahrzeugs (1) befestigt ist, wobei die Plattform (2) zumindest ein Befestigungselement (14, 15) mit zumindest einer Öffnung (12, 13) umfasst, wobei die Ausgangswelle (21, 23) des zumindest einen Motors (20, 22) sich durch die zumindest eine Öffnung (12, 13) erstreckt.

8. Flurförderfahrzeug nach einem der Ansprüche 5 bis 7, bei dem die Ausgangswelle (21, 23) des zumindest einen Motors (20, 22) einen Vorsprung (24, 25) umfasst und die zumindest eine Öffnung (12, 13) in der Plattform (2) eine Ausnehmung (16, 17) zum Aufnehmen des Vorsprungs (24, 25) umfasst, so dass die Ausgangswelle (21) des Motors an der Rotation in der Öffnung (12, 13) in der Plattform (2) gehindert wird.

9. Flurförderfahrzeug nach Anspruch 7 oder 8, bei dem der Rahmen (40) zwei Öffnungen (31, 30) umfasst; wobei die Plattform (2) ein erstes und ein zweites Befestigungselement (14, 15) umfasst, welches sich von einem Vorwärtsabschnitt der Plattform (2) erstreckt, wobei jedes Befestigungselement eine Öffnung (12, 13) umfasst, wobei ein erster Motor (20) angeordnet ist, so dass die Welle (21) des Motors (20) sich durch die erste Öffnung (30) des Rahmens (40) und die Öffnung (12) des ersten Befestigungselements (14) der Plattform erstreckt und ein zweiter Motor (22) angeordnet ist, so dass die Welle (23) des zweiten Motors sich durch die zweite Öffnung (31) des Rahmens (40) und die Öffnung (13) des zweiten Befestigungselements (15) der Plattform (2) erstreckt.

10. Flurförderfahrzeug nach einem der Ansprüche 7 bis 9, bei dem das Fahrzeug ein flaches Element (50) umfasst, welches elastisch in dem Rahmen (40) abgestützt ist, wobei das zumindest eine Befestigungselement (14, 15) der Plattform (2) an dem flachen Element (50) anliegt, wenn die Plattform (2) sich in der abgesenkten Position befindet.

## Revendications

1. Chariot de manutention (1) comprenant une plateforme conducteur (2) et au moins un arbre (21, 23) destiné à fixer de manière pivotante la plateforme (2) au chariot (1), à quoi la plateforme (2) peut pivoter à partir d'une position droite vers une position abaissée et est en outre suspendue de manière élastique dans la position abaissée, à quoi la plateforme (2) est fixée à une partie dudit au moins un arbre (21, 23) ;
et à quoi au moins une moteur (20, 22) est disposé et agencé de façon à faire tourner le au moins un arbre (21, 23), de telle sorte que la plateforme (2) vivote les positions droite et abaissée ; **caractérisé en ce que** :
l'arbre (21, 23) destiné à fixer de manière pivotante la plateforme (2) au chariot (1) coïncide avec l'arbre de sortie (21, 23) du moteur (20, 22) ;
dans lequel l'arbre (21, 23) peut tourner librement lorsque la plateforme se trouve dans la position abaissée.

2. Chariot de manutention selon la revendication 1, dans lequel la plateforme (2) est fixée à ledit au moins un arbre (21, 23) d'une façon fixe en rotation.

3. Chariot de manutention selon l'une quelconque des revendications précédentes, dans lequel l'arbre (21, 23) peut tourner librement lorsque la plateforme (2) se trouve dans une position abaissée prédéterminée.

4. Chariot de manutention selon la revendication 3, dans lequel la position prédéterminée est la position horizontale de la plateforme.

5. Chariot de manutention selon l'une quelconque des revendications précédentes, lequel l'arbre (21, 23) destiné à fixer de manière pivotante la plateforme (2) au chariot, est l'arbre de sortie (21, 23) du au moins un moteur (20, 22).

6. Chariot de manutention selon l'une quelconque des revendications précédentes, dans lequel le au moins un moteur (20, 22) est un moteur électrique en courant continu agencé de telle sorte que l'arbre de sortie (21, 23) du moteur puisse tourner librement lorsque le moteur n'est pas alimenté.

7. Chariot de manutention selon l'une quelconque des revendications 5 ou 6, dans lequel le au moins un moteur (20, 22) est fixe fermement sur un bâti (40) du chariot (1), dans lequel la plateforme (2) comprend au moins un élément de fixation (14, 15) qui présenté au moins une ouverture (12, 13), dans lequel l'arbre de sortie (21, 23) du au moins un moteur (20, 22) s'étend à travers la au moins une ouverture (12, 13).

8. Chariot de manutention selon l'une quelconque des revendications 5 à 7, dans lequel l'arbre de sortie (21, 23) du au moins un moteur (20, 22) comprend une protubérance (24, 25) et la au moins une ouverture (12, 13) dans la plateforme (2) comprend un renfoncement (16, 17) destiné à recevoir la protubérance (24, 25), de telle sorte que l'arbre de sortie (21) du moteur soit empêché de tourner dans l'ouverture (12, 13) dans la plateforme (2).

9. Chariot de manutention selon l'une quelconque des revendications 7 ou 8, dans lequel le bâti (40) comprend deux ouvertures (31) ; la plateforme (2) comprend des premier et second éléments de fixation (14, 15) qui font saillie à partir d'une partie avant de la plateforme (2), dans lequel chaque élément de fixation comprend une ouverture (12, 13), dans lequel un premier moteur (20) est agencé de telle que l'arbre (21) dudit premier moteur (20) s'étende à travers la première ouverture (30) du bâti (40) et l'ouverture (12) du premier élément de fixation (14) de la plateforme, et un second moteur (22) est agencé de telle sorte que l'arbre (23) dudit second moteur s'étende travers la seconde ouverture (31) du bâti (40) et l'ouverture (13) du second élément de fixation (15) de la plateforme (2).

10. Chariot de manutention selon l'une quelconque des revendications 7 à 9, dans lequel le chariot (1) comprend un élément plat (50) qui est suspendu de manière élastique dans le bâti (40), dans lequel le au moins un élément de fixation (14, 15) de la plateforme (2) vient en butée contre l'élément plat (50) lorsque la plateforme (2) se trouve dans la position abaissée.
